# FASCICULE DE BREVET EUROPEEN

(11) **EP 3 819 719 B1**
(45) Date de publication et mention de la délivrance du brevet: **01.01.2025**
(21) Numéro de dépôt: 19208048.9
(22) Date de dépôt: 08.11.2019
(51) Int. Cl.: G04G 9/00, G04G 99/00

(54) **MONTRE CONNECTÉE COMPRENANT UN ÉCRAN D'ANIMATION VISUELLE**
VERBUNDENE ARMBANDUHR, DIE EIN VISUELLES ANIMATIONSDISPLAY BESITZT
CONNECTED WATCH COMPRISING A VISUAL ANIMATION SCREEN

(43) Date de publication de la demande: 12.05.2021
(73) Titulaire: Tissot S.A., 2400 Le Locle (CH)
(72) Inventeur: FRANZI, Edoardo, 1400 Cheseaux-Noréaz (CH); KOLLER, Jean-Marc, 1400 Yverdon-les-Bains (CH)
(74) Mandataire: ICB SA

(56) Documents cités:
- WO-A1-2016/012836
- JP-A- S5 745 486
- US-A1- 2005 013 197
- US-A1- 2017 270 699

## Description

### Domaine technique

L'invention concerne une montre connectée comprenant un premier écran et un deuxième écran dit écran d'animation visuelle qui est distinct du premier écran et qui vise à diffuser des messages visuels relatifs à des animations visuelles et/ou sonores comprises dans un environnement/emplacement où est localisée ladite montre.

L'invention concerne aussi un système de gestion d'une pluralité de montres connectées de ce type comprenant de telles écrans d'animation visuelle formant ensemble un interface d'affichage.

### Arrière-plan technologique

Lors du déroulement d'animations visuelles et/ou sonores tels que des spectacles du types concerts ou encore évènements sportifs, il est courant que des dispositifs électroniques tels que des ordiphones, des caméras vidéo ou encore des appareils photographiques soient brandis par des personnes du public, notamment pour immortaliser des instants de ces spectacles.

On connait dans l'état de la technique une document US2005/0013197A1 qui décrit une montre qui a la fonction de lecture et d'enregistrement numérique d'un logiciel compressé vidéo-audio et image.

On connait aussi le document WO2016012836A1 qui évoque une montre-bracelet ayant une fonction de diffusion de graphismes qui comprend un dispositif de communication de données destiné à recevoir des données de graphismes et un dispositif d'affichage.

On connait également le document US2017270699A1 dans lequel une montre-bracelet comprend une unité principale et un dispositif d'affichage qui affiche un contenu d'affichage.

Cependant, une tel usage de ces dispositifs lors de ces spectacles à pour inconvénient majeur d'engendrer systématiquement une pollution visuelle venant alors perturber leur bon déroulement.

Dans ces conditions, on comprend qu'il existe un réel besoin de trouver une solution permettant de surmonter ces inconvénients de l'art antérieur.

### Résumé de l'invention

Un des buts de la présente invention est par conséquent de proposer un procédé qui vise à mettre à profit les écrans de dispositifs électroniques tels que des montres connectées pour contribuer au show visuel de tels spectacles.

Dans ce dessein, l'invention concerne une montre connectée comprenant un premier écran coopérant avec un premier dispositif de gestion d'affichage de ladite montre participant à la diffusion d'informations relatives à des fonctions réalisées par ladite montre et un deuxième écran distinct du premier écran coopérant avec un deuxième dispositif de gestion d'affichage de la montre contribuant à la diffusion d'informations concernant tout ou partie d'un message visuel relatif à une animation visuelle et/ou sonore comprise dans un environnement où est localisée ladite montre, lesdites informations étant transmises à partir d'un serveur de contrôle d'affichage pilotant le deuxième dispositif de gestion d'affichage de la montre.

Dans d'autres modes de réalisation :
- le deuxième dispositif comprend une interface de communication dédiée pour échanger des données de gestion de l'affichage d'informations relatives au message visuel avec le serveur de contrôle ;
- le deuxième dispositif comprend un module de capture de positionnement de la montre connectée, ledit module étant apte à détecter d'autres montres connectées pourvues de mêmes deuxièmes écrans qui sont agencées dans son environnement immédiat ;
- le module de capture de positionnement met en oeuvre une technologie de type BluetoothTM à basse consommation et en particulier une fonctionnalité de cette technologie dite de radiogoniométrie ;
- le module de capture de positionnement met en oeuvre une technologie de type Ultra Large Bande ;
- le deuxième dispositif comprend un module de mesure de l'orientation du deuxième écran ;
- le module de mesure de l'orientation du deuxième écran comprend un ou plusieurs capteurs inertiels de type accéléromètre, gyroscope ou gyromètre multiaxes miniature tels que des capteurs multiaxes fabriqués en technologie MEMS, capables de détecter des vitesses angulaires et des accélérations linéaires selon plusieurs axes associant accéléromètres et/ou gyroscopes ;
- le deuxième dispositif comprend une unité de traitement connectée à l'interface de communication, aux modules de mesure de l'orientation du deuxième écran et de capture de positionnement de la montre connectée ;
- le premier dispositif comprend une unité de traitement et une interface de saisie ;
- le deuxième écran est compris dans le bracelet de la montre.

L'invention concerne aussi un système de gestion d'une pluralité de montres connectées, le système visant à réaliser un affichage d'un message visuel sur une interface d'affichage formée par lesdits deuxième écrans de cette pluralité de montres connectées, chaque montre de ce système comprenant des premier et deuxième écrans, le premier écran coopérant avec un premier dispositif de gestion d'affichage de la montre pour la diffusion d'informations relatives à des fonctions réalisées par ladite montre et le deuxième écran distinct du premier écran coopérant avec un deuxième dispositif de gestion d'affichage de la montre pour la diffusion d'informations relatives à tout ou partie de ce message visuel relatif à une animation visuelle et/ou sonore comprise dans un environnement où est localisée ladite montre, lesdites informations étant transmises à partir d'un serveur de contrôle d'affichage de ce système pilotant le deuxième dispositif de gestion d'affichage de la montre.

### Brève description des figures

L'invention sera décrite ci-après de manière plus détaillée à l'aide d'un dessin annexé, donné à titre d'exemple nullement limitatif, dans lequel :

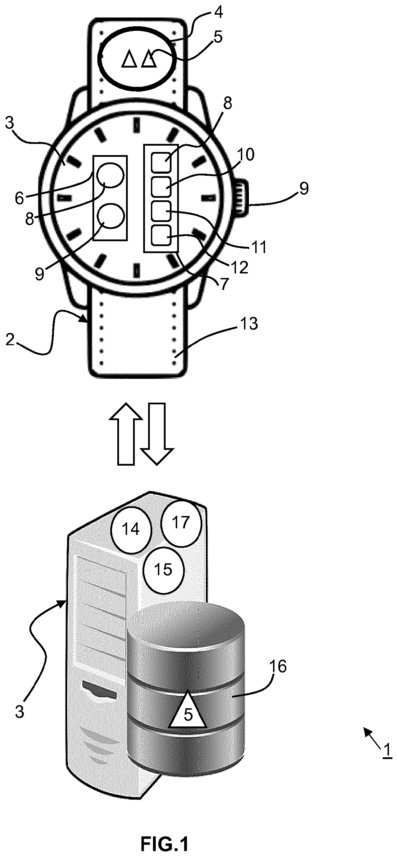

- La figure 1 est une représentation d'un système de gestion d'une pluralité de montres connectées visant à réaliser un affichage d'un message visuel sur une interface d'affichage formée par lesdits deuxième écrans de cette pluralité de montres connectées, selon un mode de réalisation de la présente invention.

### Description détaillée de l'invention

Sur la figure 1, est illustré une montre connectée 2 comprenant un premier écran comprenant un cadran d'affichage hybride pourvu d'une première composante d'affichage analogique et d'une deuxième composante d'affichage numérique et/ou alphanumérique. Un tel premier écran est également appelé « écran fonctionnel » car il est spécifiquement prévu pour diffuser des informations relatives à des fonctions réalisées par cette montre à destination ou pour l'usage de l'utilisateur de cette montre 2 ici son porteur et ce, suite à une interaction entre cet utilisateur et une interface de saisie 9 de cette montre 2. Ces fonctions concernent par exemple l'utilisation ou la consultation d'une information horaire, d'alarme, ou encore d'une d'information de géolocalisation, de repérage (boussole) etc...

Cette montre connectée 2 comprend un deuxième écran 4 dit « écran d'animation visuelle » qui est distinct de l'écran fonctionnel. Cet écran d'animation visuelle 4 est destiné exclusivement à participer à la diffusion de de tout ou partie d'un message visuel 5 de manière synchronisée ou coordonnée avec d'autres deuxièmes écrans de montres connectées agencées dans un même lieu ou environnement. En effet, ces deuxièmes écrans 4 peuvent diffuser chacun le même message visuel 5 ou une portion complémentaire de ce message visuel 5 de sorte à ce que tous ces deuxièmes écrans forment ensemble une interface d'affichage comprenant le message visuel résultant de l'assemblage de toutes ces portions. Ces messages visuels 5 sont différents de fonctions réalisées par la montre 2 du fait notamment que leur diffusion ne résulte pas d'une configuration préalable d'une application informatique de la montre 2 par l'utilisateur ou encore d'une interaction entre l'interface de saisie 9 de cette montre 2 et l'utilisateur. De plus ces messages visuels 5 ne sont pas destinés exclusivement au porteur de la montre comme peut l'être une fonction de la montre telle qu'une alarme. Dans le contexte de ce mode de réalisation, chaque message visuel 5 est relatif à une animation visuelle et/ou sonore (par exemple un évènement sportif, culturel, un spectacle, un concert, etc...) comprise dans un environnement/emplacement/lieu où est localisée ladite montre 2. Ainsi que nous l'avons déjà évoqué, ce message visuel 5 est destiné à une interface d'affichage formée par plusieurs deuxièmes écrans de montres connectées 2 agencées dans un environnement/emplacement/lieu proche de la montre connectée 2. De plus, ce message visuel 5 vise par exemple à apporter une contribution visuelle aux animations visuelles et/ou sonores. On comprend donc que le contenu de ce message visuel 5 est en rapport direct avec l'animation visuelle et/ou sonore comprise dans l'environnement où est localisée la montre connectée 2 et donc l'utilisateur de la montre 2. Un tel contenu peut être synchronisé ou coordonné avec cette animation visuelle et/ou sonore. A titre d'exemple, une tel message visuel 5 comprend une représentation graphique animée ou statique. De manière non limitative et non exhaustive, ce message 5 comprend une image comprenant des objets ou un motif lumineux ou encore une figuration symbolique d'une émotion de type « émoticône », un format d'échange d'images (plus connu sous l'acronyme GIF pour « Graphics Interchange Format »), un mot/terme ou un groupe de mots/termes ou encore une vidéo.

Ce deuxième écran 4 est de préférence agencé dans un bracelet 13 flexible ou rigide de ladite montre 2. Un tel deuxième écran 4 est du type matrice active et comprend des électrodes électroluminescentes. Il est de plus déformable et étirable.

Une telle montre 2 comprend un premier dispositif de gestion d'affichage 6 qui est connectée au premier écran. Ce premier dispositif 6 est prévu pour gérer l'affichage de ce premier écran en fonction notamment des interactions entre la montre 2 et l'utilisateur. Ce premier dispositif 6 comprend essentiellement :
- - une unité de traitement 8 comportant des ressources matérielles et logicielles en particulier au moins un processeur coopérant avec des éléments de mémoire, et
- - une interface de saisie 9 tel qu'un bouton poussoir, une couronne, un clavier ou encore une interface tactile comprise par exemple dans l'interface de diffusion d'une information visuelle.

On notera que le premier dispositif 6 de gestion est de préférence agencé dans un boitier de la montre 2.

La montre 2 comprend aussi un deuxième dispositif de gestion d'affichage 7 qui est connectée au deuxième écran 4. Ce deuxième dispositif 7 comporte :
- l'unité de traitement 8 ;
- une interface de communication 10 dédiée à l'échange de données de gestion de l'affichage d'informations relatives au message visuel 5 avec un serveur 3 de contrôle gérant/pilotant le deuxième dispositif de gestion d'affichage 7 de la montre 2, le serveur 3 étant de préférence compris dans une plateforme technique distante ;
- un module de capture de positionnement 11 de cette montre connectée 2 qui est apte à détecter d'autres montres connectées de préférence similaires et pourvues de mêmes deuxièmes écrans qui sont agencées dans son environnement immédiat c'est-à-dire les autres montres qui sont proches d'elle ou à proximité d'elle. De plus, ce module 11 de la montre connectée 2 est apte à déterminer la distance qui le sépare des autres montres et à positionner chacune des autres montres qui sont proches d'elle par rapport/relativement à sa propre position ;
- un module de mesure 12 de l'orientation du deuxième écran 4, lequel module 12 comprenant un ou plusieurs capteurs inertiels de type accéléromètre, gyroscope ou gyromètre multiaxes miniature tels que des capteurs multiaxes fabriqués en technologie MEMS, capables de détecter des vitesses angulaires et des accélérations linéaires selon plusieurs axes associant accéléromètres et/ou gyroscopes.

On notera que le deuxième dispositif de gestion 7 est de préférence agencé dans le boitier de la montre 2 et qu'il est relié au deuxième écran 4 qui est compris de préférence dans le bracelet 13.

Dans ce deuxième dispositif 7, on notera que le module de capture de positionnement 11 est apte à déterminer la distance qui sépare la montre 2 le comprenant, des autres montres et à positionner chacune des autres montres qui sont proches de ladite montre 2 par rapport/relativement à la propre position de cette dite montre 2. Pour ce faire un tel module 11 peut mettre en oeuvre :
- une technologie de type Bluetooth^{™} à basse consommation encore appelée en anglais « Bluetooth low energy » et plus connue sous l'acronyme « BLE » et en particulier une fonctionnalité de cette technologie dite de radiogoniométrie, et/ou
- une technologie de type Ultra Large Bande connue sous l'acronyme en français « ULB » et en anglais UWB « ultra wideband ».

Ainsi que nous l'avons évoqué, un tel deuxième écran 5 de cette montre connectée 2 est apte à former avec d'autres deuxième écrans de d'autres montres connectées agencées dans l'environnement de cette montre connectée 2 une interface d'affichage et ce, en étant toutes portées par des utilisateurs localisés en un même lieu. Dans ce contexte, les montres 2 sont donc localisées à proximité les unes des autres pour former cette interface d'affichage. Autrement dit, une telle interface d'affichage est donc formée par l'ensemble des deuxièmes écrans 4 de cette montre 2 et des autres montres connectées d'utilisateurs qui sont tous situés en un même endroit/emplacement/lieu. On comprend donc que les utilisateurs portant chacun une montre connectée 2, peuvent être regroupés dans une même salle de concert ou dans une même arène ou encore un même stade où doit se dérouler par exemple une représentation sportive ou culturelle.

Dans ce contexte, l'invention concerne un système de gestion 1 d'une pluralité de ces montres connectées 2, ledit système1 visant à réaliser un affichage d'au moins un message visuel 5 sur une interface d'affichage formée par les deuxième écrans 4 de cette pluralité de montres connectées 2. Dans ce système 1 chaque montre connectée 2 comprend le premier écran coopérant avec le premier dispositif 6 de gestion d'affichage de la montre 2 pour la diffusion d'informations relatives à des fonctions réalisées par ladite montre 2 et le deuxième écran 4 distinct du premier écran coopérant avec le deuxième dispositif de gestion d'affichage 7 de la montre 2 pour la diffusion d'informations relatives à tout ou partie de ce message visuel 5.

Ce système 1 comprend aussi le serveur 3 de contrôle d'affichage qui participe à contrôler ou gérer le deuxième dispositif de gestion d'affichage 7 de la montre 2. Un tel serveur 3 comprend :
- une unité de traitement 14 ;
- une interface de communication 15 pour échanger des données de gestion de l'affichage d'informations relatives au message visuel 5 avec chaque montre connectée 2 via un réseau de communication ;
- une base de données 16 comprenant des messages visuels 5, et
- une interface de saisie 17 connectée à l'unité de traitement 14 et qui permet de saisir un message visuel 5 ou encore de sélectionner un message 5 archivé dans la base de données.

Ce serveur 3 est apte à échanger des données de gestion de l'affichage d'informations relatives au message visuel 5, de telles données comprenant de manière non limitative et non exhaustives, des données de mesures que nous verrons par la suite, des données relatives au message visuel 5 et/ou à des portions de ce message visuel 5.

Dans ce système 1, lorsque les montres connectées 2 détectent le serveur 3, elles établissent alors une connexion avec ce dernier qui requiert alors des données de mesures relatives à chaque deuxièmes écrans 4 de ces montre 2 afin de gérer la diffusion du message visuel 5 par ces deuxièmes écrans 4. Ces données comprennent des mesures d'au moins une caractéristique de diffusion de chaque deuxième écran 4. La caractéristique de diffusion correspond de manière non limitative et non exhaustive à :
- une caractéristique de localisation de chaque montre 2 relativement aux autres montres connectées 2 dont les deuxièmes écrans forment l'interface d'affichage, et/ou
- une caractéristique d'orientation du deuxième écran 4 de ladite montre connectée 2.

De telles caractéristiques visent à identifier/évaluer les propriétés de diffusion de chaque deuxième écran 4 afin de configurer de manière optimale les paramètres de diffusion de l'interface d'affichage constituée de ces deuxièmes écrans 4. Autrement dit, on comprend par exemple qu'un deuxième écran 4 peut être activé/désactivé c'est-à-dire qu'il est apte à diffuser ou à ne pas diffuser une portion du message visuel 5 en fonction de sa position et/ou de son orientation.

Dans ce contexte, le deuxième dispositif de gestion d'affichage 7 de chaque montre connectée 2 est configuré pour déterminer ladite au moins une caractéristique de diffusion de chaque deuxième écran 4 en effectuant des mesures de cette caractéristique à partir des modules de capture de positionnement 11 et/ou de mesure de l'orientation 12 du deuxième écran 4.

Ladite au moins une caractéristique ainsi mesurée participe à constituer les données de mesure qui sont ensuite transmises par chacun de ces deuxièmes dispositifs de gestion 7 au serveur 3 via les interfaces de communication 10, 15 de ces montres 2 et du serveur 3.

Dans ce serveur 3, l'unité de traitement 14 en étant connectée à l'interface de saisie 17 et à la base de données 16, participe alors à la réalisation et à l'archivage du message visuel 5 qui est de préférence conçu en relation avec le thème de l'animation visuelle et/ou sonore, où il sera diffusé.

Par ailleurs, cette unité de traitement 14 est configurée pour concevoir une cartographie relative à l'agencement de toutes les deuxièmes écrans 4 formant l'interface d'affichage. Pour ce faire, cette unité de traitement 14 effectue des opérations de sélection ou de tri des deuxièmes écrans 4 qui sont les plus adaptées à la diffusion du message visuel 5 réalisé et ce, au regard de leur orientation, de la distance qui les sépare d'autres deuxième écrans 4 et de leur agencement relativement aux autres deuxièmes écrans 4. De telles opérations sont effectuées à partir des données de mesure et aussi en fonction de la nature ou du type de message visuel 5 réalisé à diffuser. Sur cette base, l'unité de traitement 14 construit alors une représentation virtuelle de l'interface d'affichage sur laquelle le message visuel 5 sera affiché, ladite représentation comprenant les deuxièmes écrans 4 qui sont les plus appropriés pour la diffusion du message visuel 5.

Dans ces conditions, l'unité de traitement 14 du serveur 3 identifie à partir de la cartographie relative à l'agencement des deuxièmes écrans 4 constituant l'interface d'affichage c'est-à-dire les deuxièmes écrans 4 qui sont aptes à diffuser ledit message visuel 5. Par la suite, cette unité de traitement 14 effectue des opérations de séparation/division du message visuel en autant de portion qu'il y a de deuxième écrans 4 pour assurer la diffusion du message visuel 5 sur l'interface visuelle. Ces portions sont ensuite transmises aux montres connectées 2 correspondantes via les interfaces de communication du serveur 3 et des montres connectées 2. De manière alternative, l'unité de traitement 14 peut envoyer directement le même message visuel 5 à tous ces deuxièmes écrans 4.

Ainsi dans l'invention la gestion de l'affichage du deuxième écran 4 de chaque montre connectée 2 est assurée de manière distincte et autonome en comparaison de celle liée au premier écran et ce, notamment à partir de l'échange de données effectué entre le deuxième dispositif de gestion 7 et le serveur 3. En complément, on notera que la gestion de l'affichage du message visuel 5 requiert nécessairement que des données de mesure soient réalisées au préalable par le deuxième dispositif 7.

## Revendications

1. Montre connectée (2) comprenant un premier écran coopérant avec un premier dispositif de gestion d'affichage (6) de ladite montre (2) participant à la diffusion d'informations relatives à des fonctions réalisées par ladite montre (2) et un deuxième écran (4) distinct du premier écran coopérant avec un deuxième dispositif de gestion d'affichage (7) de la montre (2) contribuant à la diffusion d'informations concernant tout ou partie d'un message visuel (5) relatif à une animation visuelle et/ou sonore comprise dans un environnement où est localisée ladite montre (2), lesdites informations étant transmises à partir d'un serveur de contrôle (3) d'affichage
pilotant le deuxième dispositif de gestion d'affichage (7) de la montre (2).

2. Montre (2) selon la revendication précédente, **caractérisée en ce que** le deuxième dispositif (7) comprend une interface de communication (10) dédiée pour échanger des données de gestion de l'affichage d'informations relatives au message visuel (5) avec le serveur de contrôle (3).

3. Montre (2) selon l'une quelconque des revendications précédentes, **caractérisée en ce que** le deuxième dispositif (7) comprend un module de capture de positionnement (11) de la montre connectée (2), ledit module étant apte à détecter d'autres montres connectées pourvues de mêmes deuxièmes écrans qui sont agencées dans son environnement immédiat.

4. Montre (2) selon la revendication précédente, **caractérisée en ce que** le module de capture de positionnement (11) met en oeuvre :
- une technologie de type Bluetooth^{™} à basse consommation et en particulier une fonctionnalité de cette technologie dite de radiogoniométrie, et/ou
- une technologie de type Ultra Large Bande.

5. Montre (2) selon l'une quelconque des revendications précédentes, **caractérisée en ce que** le deuxième dispositif (7) comprend un module de mesure (12) de l'orientation du deuxième écran (4).

6. Montre (2) selon la revendication précédente, **caractérisée en ce que** le module de mesure (12) de l'orientation du deuxième écran (4) comprend un ou plusieurs capteurs inertiels de type accéléromètre, gyroscope ou gyromètre multiaxes miniature tels que des capteurs multiaxes fabriqués en technologie MEMS, capables de détecter des vitesses angulaires et des accélérations linéaires selon plusieurs axes associant accéléromètres et/ou gyroscopes.

7. Montre (2) selon la revendication précédente, **caractérisée en ce que** le deuxième dispositif (7) comprend une unité de traitement (8) connectée à l'interface de communication (10), aux modules de mesure (12) de l'orientation du deuxième écran (4) et de capture de positionnement (11) de la montre connectée (2).

8. Montre (2) selon la revendication 1, **caractérisée en ce que** le premier dispositif (6) comprend une unité de traitement (8) et une interface de saisie (9).

9. Montre (2) selon la revendication 1, **caractérisée en ce que** le deuxième écran (4) est compris dans le bracelet (13) de la montre (2).

10. Système de gestion (1) d'une pluralité de montres connectées (2) selon l'une quelconque des revendications précédentes, le système (1) visant à réaliser un affichage d'un message visuel (5) sur une interface d'affichage formée par lesdits deuxième écrans (4) de cette pluralité de montres connectées (2), chaque montre (2) de ce système (1) comprenant des premier et deuxième écrans (4), le premier écran coopérant avec un premier dispositif de gestion d'affichage (6) de la montre (2) pour la diffusion d'informations relatives à des fonctions réalisées par ladite montre (2) et le deuxième écran (4) distinct du premier écran coopérant avec un deuxième dispositif de gestion d'affichage (7) de la montre (2) pour la diffusion d'informations relatives à tout ou partie de ce message visuel (5) relatif à une animation visuelle et/ou sonore comprise dans un environnement où est localisée ladite montre (2), lesdites informations étant transmises à partir d'un serveur de contrôle (3) d'affichage de ce système (1) pilotant le deuxième dispositif de gestion d'affichage (7) de la montre (2).

## Patentansprüche

1. Verbundene Uhr (2), die einen ersten Bildschirm umfasst, der mit einer ersten Vorrichtung zur Anzeigesteuerung (6) der Uhr (2) zusammenwirkt, die an der Verbreitung von Informationen in Bezug auf die von der Uhr (2) ausgeführten Funktionen mitwirkt, und einen zweiten Bildschirm (4), der sich vom ersten Bildschirm unterscheidet, der mit einer zweiten Vorrichtung zur Anzeigesteuerung (7) der Uhr (2) zusammenwirkt, die an der Verbreitung von Informationen in Bezug auf die Gesamtheit oder eines Teils einer visuellen Nachricht (5) in Bezug auf eine visuelle und/oder akustische Animation mitwirkt, die in einer Umgebung umfasst ist, in der die Uhr (2) lokalisiert ist, wobei die Informationen von einem Anzeige-Kontrollserver (3) übertragen werden, der die zweite Vorrichtung zur Anzeigesteuerung (7) der Uhr (2) ansteuert.

2. Uhr (2) nach dem vorstehenden Anspruch, **dadurch gekennzeichnet, dass** die zweite Vorrichtung (7) eine zweckgebundene Kommunikationsschnittstelle (10) umfasst, um Verwaltungsdaten der Anzeige von Informationen in Bezug auf die visuelle Nachricht (5) mit dem Kontrollserver (3) auszutauschen.

3. Uhr (2) nach einem der vorstehenden Ansprüche, **dadurch gekennzeichnet, dass** die zweite Vorrichtung (7) ein Modul zur Positionierungserfassung (11) der verbundenen Uhr (2) umfasst, wobei das Modul imstande ist, andere verbundene Uhren zu erkennen, die mit den gleichen zweiten Bildschirmen versehen sind, die in ihrer unmittelbaren Umgebung angeordnet sind.

4. Uhr (2) nach dem vorstehenden Anspruch, **dadurch gekennzeichnet, dass** Modul zur Positionierungserfassung (11) umsetzt:
- eine Technologie vom Typ Bluetooth^{™} mit geringem Verbrauch und insbesondere eine sogenannte Funkpeilungs-Funktionalität dieser Technologie, und/oder
- eine Technologie vom Typ Ultrabreitband.

5. Uhr (2) nach einem der vorstehenden Ansprüche, **dadurch gekennzeichnet, dass** die zweite Vorrichtung (7) ein Modul zum Messen (12) der Ausrichtung des zweiten Bildschirms (4) umfasst.

6. Uhr (2) nach dem vorstehenden Anspruch, **dadurch gekennzeichnet, dass** das Modul zum Messen (12) der Ausrichtung des zweiten Bildschirms (4) einen oder mehrere Trägheitssensoren vom Typ Beschleunigungsmesser, Gyroskop oder mehrachsigem Miniatur-Wendezeiger, wie etwa mehrachsige Sensoren umfasst, die in MEMS-Technologie hergestellt sind, die imstande sind, Winkelgeschwindigkeiten und lineare Beschleunigungen entlang mehrerer Achsen durch Verknüpfen von Beschleunigungsmessern und/oder Gyroskopen zu erkennen.

7. Uhr (2) nach dem vorstehenden Anspruch, **dadurch gekennzeichnet, dass** die zweite Vorrichtung (7) eine Behandlungseinheit (8) umfasst, die mit der Kommunikationsschnittstelle (10), den Modulen zum Messen (12) der Ausrichtung des zweiten Bildschirms (4) und zur Positionierungserfassung (11) der verbundenen Uhr (2) verbunden ist.

8. Uhr (2) nach Anspruch 1, **dadurch gekennzeichnet, dass** die erste Vorrichtung (6) eine Behandlungseinheit (8) und eine Eingabeschnittstelle (9) umfasst.

9. Uhr (2) nach Anspruch 1, **dadurch gekennzeichnet, dass** der zweite Bildschirm (4) im Armband (13) der Uhr (2) umfasst ist.

10. System zum Verwalten (1) einer Vielzahl von verbundenen Uhren (2) nach einem der vorstehenden Ansprüche, wobei das System (1) darauf abzielt, eine Anzeige einer visuellen Nachricht (5) auf einer Anzeigeschnittstelle zu realisieren, die von den zweiten Bildschirmen (4) dieser Vielzahl von verbundenen Uhren (2) gebildet wird, wobei jede Uhr (2) dieses Systems (1) einen ersten und zweiten Bildschirm (4) umfasst, wobei der erste Bildschirm mit einer ersten Vorrichtung zur Anzeigesteuerung (6) der Uhr (2) zur Verbreitung von Informationen in Bezug auf die von der Uhr (2) ausgeführten Funktionen zusammenwirkt und der zweite Bildschirm (4), der sich vom ersten Bildschirm unterscheidet, mit einer zweiten Vorrichtung zur Anzeigesteuerung (7) der Uhr (2) zur Verbreitung von Informationen in Bezug auf die Gesamtheit oder eines Teils dieser visuellen Nachricht (5) in Bezug auf eine visuelle und/oder akustische Animation zusammenwirkt, die in einer Umgebung umfasst ist, in der die Uhr (2) lokalisiert ist, wobei die Informationen von einem Anzeige-Kontrollserver (3) dieses Systems (1) übertragen werden, der die zweite Vorrichtung zur Anzeigesteuerung (7) der Uhr (2) ansteuert.

## Claims

1. Smart watch (2) comprising a first screen cooperating with a first display management device (6) of said watch (2) contributing to broadcasting information pertaining to functions provided by said watch (2) and a second screen (4) that is separate from the first screen cooperating with a second display management device (7) of the watch (2) contributing to broadcasting information concerning all or part of a visual message (5) pertaining to a visual and/or audio animation occurring within an environment in which said watch (2) is located, said information being transmitted from a display control server (3) controlling the second display management device (7) of the watch (2).

2. Watch (2) according to the preceding claim, **characterised in that** the second device (7) comprises a communication interface (10) dedicated to exchanging management data for the display of information pertaining to the visual message (5) with the control server (3).

3. Watch (2) according to any of the preceding claims, **characterised in that** the second device (7) comprises a module (11) for acquiring the position of the smart watch (2), said module being suitable for detecting other smart watches provided with the same second screens which are arranged in the immediate environment thereof.

4. Watch (2) according to the preceding claim, **characterised in that** the position acquisition module (11) implements:
- Bluetooth^{™} low energy type technology and in particular a so-called direction finding functionality of this technology, and/or
- Technology of the Ultra Wide Band type.

5. Watch (2) according to any of the preceding claims, **characterised in that** the second device (7) comprises a module (12) for measuring the orientation of the second screen (4).

6. Watch (2) according to the preceding claim, **characterised in that** the module (12) for measuring the orientation of the second screen (4) comprises one or more inertial sensors of the accelerometer, miniature multi-axis rate sensor or gyroscope type such as multi-axis sensors manufactured using MEMS technology, capable of detecting angular speeds and linear accelerations along a plurality of axes associating accelerometers and/or gyroscopes.

7. Watch (2) according to the preceding claim, **characterised in that** the second device (7) comprises a processing unit (8) connected to the communication interface (10), and to the module (12) for measuring the orientation of the second screen (4) and the module (11) for acquiring the position of the smart watch (2).

8. Watch (2) according to claim 1, **characterised in that** the first device (6) comprises a processing unit (8) and an input interface (9).

9. Watch (2) according to claim 1, **characterised in that** the second screen (4) is included in the bracelet (13) of the watch (2).

10. System (1) for managing a plurality of smart watches (2) according to any of the preceding claims, the system (1) being intended to produce a display of a visual message (5) on a display interface formed by said second screens (4) of this plurality of smart watches (2), each watch (2) of this system (1) comprising first and second screens (4), the first screen cooperating with a first display management device (6) of the watch (2) to broadcast information pertaining to functions provided by said watch (2) and the second screen (4), which is separate from the first screen, cooperating with a second display management device (7) of the watch (2) to broadcast information pertaining to all or part of this visual message (5) pertaining to a visual and/or audio animation occurring within an environment in which said watch (2) is located, said information being transmitted from a display control server (3) of this system (1) controlling the second display management device (7) of the watch (2).
